# EUROPÄISCHE PATENTANMELDUNG

(11) **EP 4 008 938 A1**
(43) Veröffentlichungstag der Anmeldung: **08.06.2022**
(21) Anmeldenummer: 20210843.7
(22) Anmeldetag: 01.12.2020
(51) Int. Cl.: F16K 11/085, F16K 11/076, F16K 37/00

(54) **VENTILANORDNUNG**

(71) Anmelder: Hooge, Willi, 4313 Möhlin (CH)
(72) Erfinder: Hooge, Willi, 4313 Möhlin (CH)
(74) Vertreter: Herrmann, Johanna

(57) **Zusammenfassung**

Eine Ventilanordnung (1), enthält ein Ventilgehäuse (10) welches ein Drehelement (16) und ein Hülsenelement (15) enthält. Das Hülsenelement (15) enthält eine Mehrzahl von radialen Öffnungen (11, 12, 13, 14), wobei eine erste radiale Öffnung (11) gegenüberliegend zu einer zweiten radialen Öffnung (12) angeordnet ist, wobei eine dritte radiale Öffnung (13) gegenüberliegend zu einer vierten radialen Öffnung (14) angeordnet ist. Das Drehelement (16) enthält eine Durchgangsbohrung (17). Das Drehelement (16) ist im Hülsenelement (15) derart drehbar, dass die Durchgangsbohrung (17) entweder mit der ersten radialen Öffnung (11) und zweiten radialen Öffnung (12) in fluidleitender Verbindung steht oder mit der dritten radialen Öffnung (13) und der vierten radialen Öffnung (14) in fluidleitender Verbindung steht oder mit keiner der ersten, zweiten, dritten oder vierten radialen Öffnung (11, 12, 13, 14) in fluidleitender Verbindung steht. Die erste radiale Öffnung (11) ist über eine erste Fluidleitung (21) mit einem Ausgang einer Pumpe (2) verbindbar, die zweite radiale Öffnung (12) mit einer zweiten Fluidleitung (22) verbindbar, die dritte radiale Öffnung (13) mit einer dritten Fluidleitung (23) verbindbar, die vierte radiale Öffnung (14) mit einer vierten Fluidleitung (24) verbindbar, wobei die vierte Fluidleitung (24) mit einem Eingang der Pumpe (2) verbindbar ist.

## Beschreibung

### Hintergrund

Die vorliegende Erfindung betrifft eine Ventilanordnung zur Befüllung oder Entleerung eines Behälters, beispielsweise zur Befüllung oder Entleerung eines aufblasbaren Gegenstandes.

### Stand der Technik

Aufblasbare Gegenstände, wie beispielsweise Luftmatratzen werden manuell, mittels eines Blasebalgs oder mittels einer Pumpe befüllt. Eine derartige Pumpe wird beispielsweise in der WO2018201371 A offenbart. Diese Pumpe wird an eine Luftventilanordnung angedockt, wenn die Luftmatratze befüllt werden soll. Das Luftventil enthält einen Luftkanal zur Befüllung der Luftmatratze und einen Luftkanal zum Ablassen der Luft aus der Luftmatratze.

Aus der EP 3 059 451 A1 ist ein dreistöckiges Ventil zum Aufblasen einer Matratze bekannt, welches mit einer Pumpe und einem Luftventil koppelbar ist, sodass durch Umschalten des dreistöckigen Ventils ein Aufblasen einer Luftmatratze sowie ein Ablassen der Luft ermöglicht ist. Ein derartiges dreistöckiges Ventil ist aufwändig herzustellen und benötigt viel Platz.

Zudem hat sich bei dieser Lösung als nachteilig erwiesen, dass das dreistöckige Ventil, die Pumpe und das Luftventil ständig an die Luftmatratze gekoppelt bleiben. Daher ist diese Lösung beispielsweise für Luftmatratzen für den Badebetrieb nicht geeignet, insbesondere wenn die Pumpe von einem Elektromotor angetrieben wird, da die Pumpe und die Elektronik im Wasser Schaden nehmen können.

Daher besteht Bedarf an einer einfachen, platzsparenden Ventilanordnung, mittels welcher sowohl die Befüllung eines Behälters mit einem Fluid als auch dessen Entleerung mittels einer Pumpe erfolgen können. Zudem besteht Bedarf an einer Ventilanordnung, die vom Behälter abgenommen werden kann, wobei das Fluid, ein Gas, im Behälter verbleibt.

### Aufgabe der Erfindung

Aufgabe der Erfindung ist es, eine Ventilanordnung bereitzustellen, welche einerseits weniger Platz benötigt als vorbekannte Ventilanordnungen und andererseits sicherstellt, dass ein Behälter mit ca. 200l Füllvolumen innerhalb eines Zeitraums von maximal einer Minute befüllt werden kann und innerhalb eines vergleichbaren Zeitraums wieder entleert werden kann.

### Beschreibung der Erfindung

Die Lösung der Aufgabe der Erfindung erfolgt durch eine Ventilanordnung gemäss Anspruch 1. Vorteilhafte Ausführungsbeispiele der Ventilanordnung sind Gegenstand der Ansprüche 2 bis 15.

Wenn der Begriff "beispielsweise" in der nachfolgenden Beschreibung verwendet wird, bezieht sich dieser Begriff auf Ausführungsbeispiele und/oder Ausführungsformen, was nicht notwendigerweise als eine bevorzugtere Anwendung der Lehre der Erfindung zu verstehen ist. In ähnlicher Weise sind die Begriffe "vorzugsweise", "bevorzugt" zu verstehen, indem sie sich auf ein Beispiel aus einer Menge von Ausführungsbeispielen und/oder Ausführungsformen beziehen, was nicht notwendigerweise als eine bevorzugte Anwendung der Lehre der Erfindung zu verstehen ist. Dementsprechend können sich die Begriffe "beispielsweise", "vorzugsweise" oder "bevorzugt" auf eine Mehrzahl von Ausführungsbeispielen und/oder Ausführungsformen beziehen.

Die nachfolgende detaillierte Beschreibung enthält verschiedene Ausführungsbeispiele für die erfindungsgemässe Ventilanordnung. Die Beschreibung einer bestimmten Ventilanordnung ist nur als beispielhaft anzusehen. In der Beschreibung und den Ansprüchen werden die Begriffe "enthalten", "umfassen", "aufweisen" als "enthalten, aber nicht beschränkt auf" interpretiert.

Die Pumpe kann zur Förderung eines beliebigen Fluids ausgebildet sein. Das Fluid kann ein Gas oder eine Flüssigkeit umfassen. Unter einem Gas wird in der Folge ein beliebiges kompressibles Medium in gasförmigem Zustand verstanden. Insbesondere kann das Gas Luft umfassen. Die Luft kann insbesondere unter atmosphärischem Druck bereitgestellt werden. Die Temperatur der Luft liegt insbesondere im Bereich von 0 Grad bis 45 Grad Celsius.

Die Ventilanordnung gemäss der vorliegenden Erfindung enthält ein Ventilgehäuse, welches ein Drehelement und ein Hülsenelement enthält, wobei das Hülsenelement eine Mehrzahl von radialen Öffnungen enthält. Eine erste radiale Öffnung ist gegenüber liegend zu einer zweiten radialen Öffnung angeordnet. Eine dritte radiale Öffnung ist gegenüberliegend zu einer vierten radialen Öffnung angeordnet. Das Drehelement enthält eine Durchgangsbohrung. Diese Durchgangsbohrung erstreckt sich gemäss eines Ausführungsbeispiels in radialer Richtung. Das Drehelement ist im Hülsenelement derart drehbar, dass die Durchgangsbohrung entweder mit der ersten radialen Öffnung und zweiten radialen Öffnung in fluidleitender Verbindung steht oder mit der dritten radialen Öffnung und der vierten radialen Öffnung in fluidleitender Verbindung steht oder mit keiner der ersten, zweiten, dritten oder vierten radialen Öffnungen in fluidleitender Verbindung steht. Die erste radiale Öffnung ist über eine erste Fluidleitung zur Verbindung mit einem Ausgang einer Pumpe ausgebildet. Die zweite radiale Öffnung ist mit einer zweiten Fluidleitung verbindbar. Die dritte radiale Öffnung ist mit einer dritten Fluidleitung verbindbar. Die vierte radiale Öffnung ist mit einer vierten Fluidleitung verbindbar. Die vierte Fluidleitung ist insbesondere zur Verbindung mit einem Eingang der Pumpe ausgebildet. Insbesondere kann die zweite Fluidleitung und die dritte Fluidleitung zur Verbindung mit einem Behälter ausgebildet sein.

Gemäss eines Ausführungsbeispiels ist in einer ersten Stellung des Drehelements die erste Öffnung mit der ersten Fluidleitung verbunden, wobei die erste Öffnung mit der Durchgangsbohrung in fluidleitender Verbindung steht, wobei die zweite Öffnung mit der Durchgangsbohrung zur Förderung eines Fluids in die zweite Fluidleitung verbunden ist. Insbesondere kann das Fluid mittels der Pumpe gefördert werden.

Gemäss eines Ausführungsbeispiels ist in einer zweiten Stellung des Drehelements die dritte Fluidleitung mit der dritten Öffnung verbunden, wobei die dritte Öffnung mit der Durchgangsbohrung in fluidleitender Verbindung steht. Die Durchgangsbohrung steht gemäss dieses Ausführungsbeispiels mit der vierten Öffnung in Verbindung, wobei die vierte Öffnung mit der vierten Fluidleitung in Verbindung steht. Gemäss dieses Ausführungsbeispiels ist das Fluid von der Pumpe aus dem Behälter absaugbar, wenn die Pumpe in Betrieb genommen wird. Gemäss dieses Ausführungsbeispiels ist somit eine schnelle Entleerung des Behälters möglich. Ein Behälter mit einem Füllvolumen von 180 Litern kann in einer Minute mit einer Pumpe entleert werden, deren Volumenstrom 180 Liter/Minute beträgt. Die Verwendung einer Ventilanordnung gemäss dieses Ausführungsbeispiels ist somit wesentlich zeitsparender als eine manuelle Entleerung des Behälters.

Gemäss eines Ausführungsbeispiels enthält das Hülsenelement eine Zulaufleitung enthält, die zum Einlass der Pumpe führt und eine Ablaufleitung, die zum Auslass der Pumpe führt. Die Anordnung der Zulaufleitungen und Ablaufleitungen im Hülsenelement führt zu einer besonders platzsparenden Ausführung der Ventilanordnung. Zudem kann die Anzahl der erforderlichen Dichtungsstellen reduziert werden, was die Anzahl von allfällig vorzusehenden Dichtungselementen verringert.

Insbesondere sind die Zulaufleitung und die Ablaufleitung mittels eines Schliesselements verschliessbar. Hierzu muss das Schliesselement nur von der ersten in die zweite Stellung bewegt werden, was durch die Drehbewegung des Drehelements erfolgt, wenn das Schliesselement drehfest mit dem Drehelement verbunden ist. Mittels des Schliesselements, welches als Ringkörper auf einfache Weise in verschiedensten Materialien herstellbar ist, kann somit eine Befüllung des Behälters, eine Entleerung des Behälters erfolgen. Zudem kann in der dritten Stellung des Drehelements sichergestellt werden, dass kein Fluid aus dem Behälter entweichen kann.

Insbesondere kann das Schliesselement eine Verbindungsöffnung enthalten. Die Verbindungsöffnung kann mit der Zulaufleitung verbunden sein, sodass ein Fluid von der Verbindungsöffnung in die Zulaufleitung ansaugbar ist, um in die vierte Fluidleitung eingeleitet zu werden, welche mit dem Einlass der Pumpe verbunden sein kann, wenn sich das Drehelement in der ersten Stellung befindet.

Insbesondere kann das Fluid von der Pumpe in die erste Fluidleitung pumpbar sein. Die erste Fluidleitung ist gemäss eines Ausführungsbeispiels mit der ersten radialen Öffnung verbunden, wobei die erste radiale Öffnung über die Durchgangsbohrung mit der zweiten radialen Öffnung und mit der zweiten Fluidleitung verbunden ist, wenn sich das Drehelement in der ersten Stellung befindet.

Gemäss eines Ausführungsbeispiels ist die Verbindungsöffnung mit der Ablaufleitung verbunden ist, sodass ein Fluid durch die Verbindungsöffnung in die Ablaufleitung abpumpbar ist, wenn sich das Drehelement in der zweiten Stellung befindet.

Gemäss eines Ausführungsbeispiels ist das Fluid aus dem Behälter mittels der Pumpe absaugbar, wenn sich das Drehelement in der zweiten Stellung befindet, wobei das Fluid durch die dritte Fluidleitung in die dritte radiale Öffnung des Hülsenelements einleitbar ist, von der dritten radialen Öffnung über die Durchgangsbohrung in die vierte radiale Öffnung einleitbar ist und von der vierten Öffnung in die vierte Fluidleitung einleitbar ist, welche mit dem Einlass der Pumpe in fluidleitender Verbindung stehen kann.

Gemäss eines Ausführungsbeispiels enthält das Drehelement ein Kontaktelement enthält, mittels welchem beispielsweise ein Signal zur Inbetriebnahme der Pumpe übermittelbar ist.

Gemäss eines Ausführungsbeispiels enthält das Schliesselement ein Kontaktaufnahmeelement, mittels welchem ein elektrischer Kontakt zur Inbetriebnahme der Pumpe herstellbar sein kann. Insbesondere kann die Pumpe automatisch in Betrieb genommen werden, wenn das Drehelement von der dritten Stellung in eine der ersten oder zweiten Stellungen bewegt wird.

Gemäss eines Ausführungsbeispiels enthält die Ventilanordnung ein Andockelement. Mittels des Andockelements kann ein Rückschlagventil in geöffnetem Zustand haltbar sein, wenn sich das Drehelement in einer der ersten, zweiten oder dritten Stellungen befindet und die Ventilanordnung mit dem Behälter verbunden bleibt.

Ein Vorteil der erfindungsgemässen Ventilanordnung ist darin zu sehen, dass eine beliebige handelsübliche Pumpe zum Einsatz kommen kann, die an entsprechende Anschlüsse der ersten und vierten Fluidleitung angekoppelt werden kann. Die Anschlüsse können Flanschverbindungen oder handelsübliche Adapter umfassen, die hier nicht weiter dargestellt sind, da sie dem Fachmann geläufig sind. Ein weiterer Vorteil der erfindungsgemässen Ventilanordnung ist darin zu sehen, dass sie sowohl für die Befüllung als auch für die Entleerung des Behälters, insbesondere des aufblasbaren Gegenstandes verwendet werden kann. Eine entsprechend ausgewählte Pumpe kann einen Volumenstrom von 180 l/min bewältigen. Eine derartige Pumpe kann innerhalb Bauraums mit Abmessungen von von 200x150x150 mm Platz finden. Insbesondere kann eine derartige Ventilanordnung einen Bauraum von nicht mehr als 200x100x100 mm beanspruchen. Beispielsweise kann eine Ventilanordnung einen Bauraum von 160x63x30 mm beanspruchen. Eine Pumpe kann in einem zylinderförmigen Bauraum Platz finden, der einen Durchmesser von maximal 50 mm und eine Höhe von maximal 50 mm umfasst, insbesondere kann die Höhe des zylinderförmigen Bauraums maximal 45 mm betragen. Eine derartige Pumpe kann bequem in einer Tasche mitgeführt werden, beispielsweise, wenn es ich bei dem Behälter um eine aufblasbare Matratze, ein aufblasbares Wasserfahrzeug oder dergleichen handelt.

### Kurzbeschreibung der Zeichnungen

Nachfolgend wird die erfindungsgemässe Ventilanordnung anhand einiger Ausführungsbeispiele dargestellt. Es zeigen
Fig. 1a eine Ansicht einer Ventilanordnung mit einem Drehelement in einer ersten Stellung gemäss eines ersten Ausführungsbeispiels,
Fig. 1b eine Ansicht einer Ventilanordnung mit einem Drehelement in einer zweiten Stellung gemäss Fig. 1a,
Fig. 1c eine Ansicht einer Ventilanordnung mit einem Drehelement in einer dritten Stellung gemäss Fig. 1a,
Fig. 2a ein Drehelement sowie ein Schliesselement und ein Hülsenelement einer Ventilanordnung gemäss eines zweiten Ausführungsbeispiels in einer Ansicht von oben in einer ersten Stellung,
Fig. 2b eine Explosionszeichnung des in Fig. 2a dargestellten Ausführungsbeispiels der Ventilanordnung in einer Ansicht von vorne in der ersten Stellung,
Fig. 2c ein Drehelement sowie ein Schliesselement und ein Hülsenelement der Ventilanordnung gemäss des zweiten Ausführungsbeispiels in einer Ansicht von oben in einer zweiten Stellung,
Fig. 2d eine Explosionszeichnung des in Fig. 2c dargestellten Ausführungsbeispiels der Ventilanordnung in einer Ansicht von vorne in der zweiten Stellung,
Fig. 3a ein Anwendungsbeispiel für eine Ventilanordnung nach einem der vorhergehenden Ausführungsbeispiele für eine aufblasbare Liege,
Fig. 3b die aufblasbare Liege im Transportzustand,
Fig. 3c ein Ausführungsbeispiel für eine handelsübliche Pumpe,
Fig. 3d ein Ausführungsbeispiel für ein Rückschlagventil,
Fig. 4a ein Drehelement sowie ein Schliesselement und ein Hülsenelement einer Ventilanordnung gemäss eines dritten Ausführungsbeispiels in einer Ansicht von oben in einer ersten Stellung,
Fig. 4b eine Explosionszeichnung des in Fig. 4a dargestellten Ausführungsbeispiels der Ventilanordnung in einer Ansicht von vorne in der ersten Stellung,
Fig. 4c ein Drehelement sowie ein Schliesselement und ein Hülsenelement der Ventilanordnung gemäss des dritten Ausführungsbeispiels in einer Ansicht von oben in einer zweiten Stellung,
Fig. 4d eine Explosionszeichnung des in Fig. 4c dargestellten Ausführungsbeispiels der Ventilanordnung in einer Ansicht von vorne in der zweiten Stellung,
Fig. 5a eine Ansicht eines Drehelements eines vierten Ausführungsbeispiels zur Verwendung in einem Hülsenelement nach einem der vorhergehenden Ausführungsbeispiele,
Fig. 5b eine Ansicht des Drehelements gemäss Fig. 5a von oben,
Fig. 5c einen Schnitt durch das Drehelement gemäss Fig. 5a entlang der mit A-A bezeichneten Schnittebene,
Fig. 5d einen Schnitt durch das Drehelement gemäss Fig. 5a entlang der mit B-B bezeichneten Schnittebene,
Fig. 5e einen Schnitt durch das Drehelement gemäss Fig. 5b entlang der mit C-C bezeichneten Schnittebene.

### Detaillierte Beschreibung der Zeichnungen

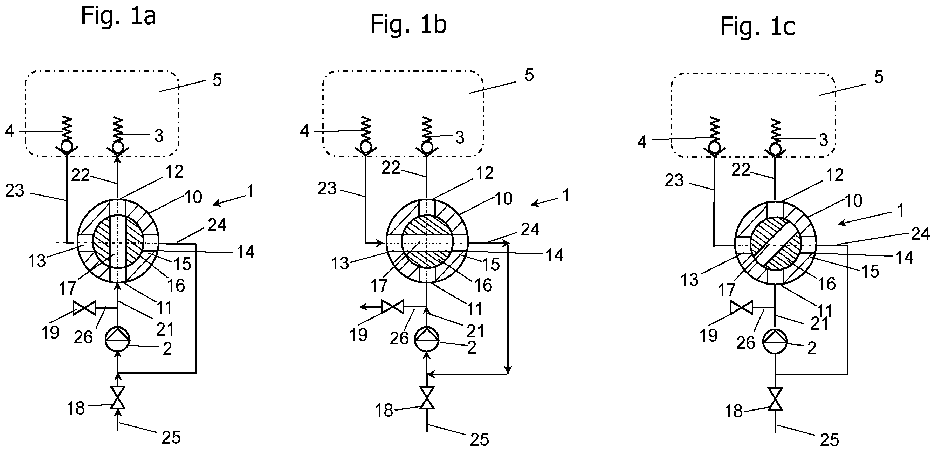

Fig. 1a zeigt eine schematische Darstellung einer erfindungsgemässen Ventilanordnung 1 gemäss eines ersten Ausführungsbeispiels. Die Ventilanordnung 1, enthält ein Ventilgehäuse 10, in welchem ein Drehelement 16 und ein Hülsenelement 15 enthalten sind. Das Hülsenelement 15 enthält eine Mehrzahl von radialen Öffnungen 11, 12, 13, 14. Eine erste radiale Öffnung 11 ist gegenüberliegend zu einer zweiten radialen Öffnung 12 angeordnet. Eine dritte radiale Öffnung 13 ist gegenüberliegend zu einer vierten radialen Öffnung 14 angeordnet. Das Drehelement 16 enthält eine Durchgangsbohrung 17. Das Drehelement 16 ist im Hülsenelement 15 derart drehbar, dass die Durchgangsbohrung 17 entweder mit der ersten radialen Öffnung 11 und zweiten radialen Öffnung 12 in fluidleitender Verbindung steht oder mit der dritten radialen Öffnung 13 und der vierten radialen Öffnung 14 in fluidleitender Verbindung steht oder mit keiner der ersten, zweiten, dritten oder vierten radialen Öffnung 11, 12, 13, 14 in fluidleitender Verbindung steht. Die erste radiale Öffnung 11 ist über eine erste Fluidleitung 21 mit einem Ausgang einer Pumpe 2 verbindbar. Die zweite radiale Öffnung 12 ist mit einer zweiten Fluidleitung 22 verbindbar. Die dritte radiale Öffnung 13 ist mit einer dritten Fluidleitung 23 verbindbar. Die vierte radiale Öffnung 14 ist mit einer vierten Fluidleitung 24 verbindbar, wobei die vierte Fluidleitung 24 mit einem Eingang der Pumpe 2 verbindbar ist.

Gemäss des in Fig. 1a dargestellten Ausführungsbeispiels steht die erste radiale Öffnung 11 über die Durchgangsbohrung 17 mit der zweiten radialen Öffnung 12 in fluidleitender Verbindung, sodass ein Fluid, welches von der Pumpe 2 gefördert wird, von der ersten Fluidleitung 21 in die erste radiale Öffnung 11, anschliessend in die Durchgangsbohrung 17 und von dort in die zweite radiale Öffnung 12 gefördert wird und von der zweiten radialen Öffnung 12 in die zweite Fluidleitung 22 gelangt. Die zweite Fluidleitung 22 ist mit einem Einlass eines Behälters 5, welcher als Fluidsenke ausgebildet ist, verbunden.

Der Einlass des Behälters 5 kann ein erstes Rückschlagventil 3 enthalten, welches sich im geöffneten Zustand befindet, solange es mit der zweiten Fluidleitung 22 in fluidleitendem Kontakt ist.

Wenn die Pumpe 2 in Betrieb genommen wird, wird ein erstes Schliesselement 18 geöffnet, welches sich in einer Zulaufleitung 25 befindet, welche zum Einlass der Pumpe 2 führt. Wenn das erste Schliesselement 18 geöffnet ist, steht die Zulaufleitung 25 mit einer Fluidquelle in Verbindung. Wenn die Ventilanordnung 1 zum Betrieb mit Luft ausgebildet ist, steht die Zulaufleitung 25 bei geöffnetem ersten Schliesselement 18 mit der Umgebungsluft in fluidleitender Verbindung. Wenn die Pumpe 2 in Betrieb ist, wird somit das Fluid von der Fluidquelle (nicht dargestellt) in die zweite Fluidleitung 22 gefördert und gelangt als Druckfluid in den Behälter 5, beispielsweise einen aufblasbaren Gegenstand.

Von der ersten Fluidleitung 21 zweigt eine Zweigleitung 26 ab, die zu einem zweiten Schliesselement 19 führt. Das zweite Schliesselement 19 ist geschlossen, solange Druckfluid in den Behälter 5 gefördert wird. Zudem ist in Fig. 1a die vierte Fluidleitung als eine Bypassleitung ausgebildet, mittels welcher die Zulaufleitung 25 mit der vierten radialen Öffnung 14 in fluidleitender Verbindung stehen kann. In der in Fig. 1a dargestellten Stellung des Drehelements 16 ist die vierte radiale Öffnung 14 des Hülsenelements 15 verschlossen. Daher strömt durch kein Fluid durch die vierte Fluidleitung 24.

In Fig. 1a ist die Strömungsrichtung des durch die Zulaufleitung 25, die Pumpe 2, die erste Fluidleitung 21, die erste radiale Öffnung 11, die Durchgangsbohrung 17 und die zweite radiale Öffnung 12 durch Pfeile gekennzeichnet. In Fluidleitungen, die keine Pfeile enthalten, strömt kein Fluid.

Fig. 1b zeigt die Ventilanordnung 1 gemäss Fig. 1a, wenn der Behälter 5 als Fluidquelle ausgebildet ist. Gemäss dieses Ausführungsbeispiels soll der Behälter 5 entleert werden. Zu diesem Zweck wird das Drehelement 16 im Hülsenelement 15 um einen Winkel gedreht, der im vorliegenden Ausführungsbeispiel 90 Grad beträgt.

In der in Fig. 1b gezeigten Stellung des Drehelements 16 ist die dritte radiale Öffnung 13 über die Durchgangsbohrung 17 mit der vierten radialen Öffnung 14 verbunden, sodass Fluid über die dritte Fluidleitung 23 vom Behälter 5 in die dritte radiale Öffnung 13 einströmen kann. Die Rückschlagventile 3, 4 befinden sich in der geöffneten Stellung, wenn der Behälter 5 mit der Ventilanordnung 1 verbunden ist. Das Fluid aus dem Behälter 5 kann von der dritten radialen Öffnung in die Durchgangsbohrung 17 und von der Durchgangsbohrung 17 in die vierte radiale Öffnung 14 strömen. Die vierte radiale Öffnung 14 ist mit der vierten Fluidleitung 24 in fluidleitender Verbindung, welche wiederum mit dem Einlass der Pumpe 2 in Verbindung ist. Das erste Schliesselement 18 in der Zulaufleitung 25 ist nunmehr geschlossen, sodass das Fluid von der Pumpe 2 angesaugt werden kann. Die Pumpe 2 fördert nunmehr das Fluid aus dem Behälter 5, sodass der Behälter 5 schneller entleert werden kann. Selbstverständlich kann man das erste Schliesselement 18 öffnen, anstelle die Pumpe 2 in Betrieb zu nehmen, wodurch das Fluid in die Umgebung abgeführt werden kann.

Bei geschlossenem ersten Schliesselement 18 wird somit das Fluid von der Pumpe 2 in die Zweigleitung 26 gefördert, wobei das zweite Schliesselement 19 geöffnet ist. Stromabwärts des zweiten Schliesselements 19 befindet sich eine Fluidsenke, die nicht näher dargestellt ist. Diese Fluidsenke kann einen Fluidauslass umfassen, der in die Umgebung führt oder zu einem weiteren Behälter.

In der in Fig. 1c gezeigten Stellung des Drehelements 16 ist keine der radiale Öffnungen 11, 12, 13, 14 über die Durchgangsbohrung 17 verbunden, sodass kein Fluid strömen kann. Die Rückschlagventile 3, 4 befinden sich in der geöffneten Stellung, wenn der Behälter 5 mit der Ventilanordnung 1 verbunden ist. Das Fluid aus dem Behälter 5 kann nicht weiter als bis zur zweiten radialen Öffnung 12 bzw. der dritten radialen Öffnung 13 gelangen. Daher bleibt sämtliches im Behälter 5 befindliches Fluid im Innenraum desselben. Wenn es sich bei dem Behälter um einen aufblasbaren Gegenstand handelt, verharrt der aufblasbare Gegenstand im aufgeblasenen Zustand. Die Pumpe 2 ist in dieser Stellung nicht in Betrieb, insbesondere wenn das zweite Schliesselement 19 geschlossen ist. Das erste Schliesselement 18 kann sich in der geöffneten oder geschlossenen Stellung befinden. Gemäss der vorliegenden Darstellung befindet sich die Durchgangsbohrung 17 in einer Zwischenposition, das Drehelement 16 wurde um einen Winkel von 45 Grad in Bezug auf eine der in Fig. 1a oder Fig. 1b gezeigten Stellungen gedreht.

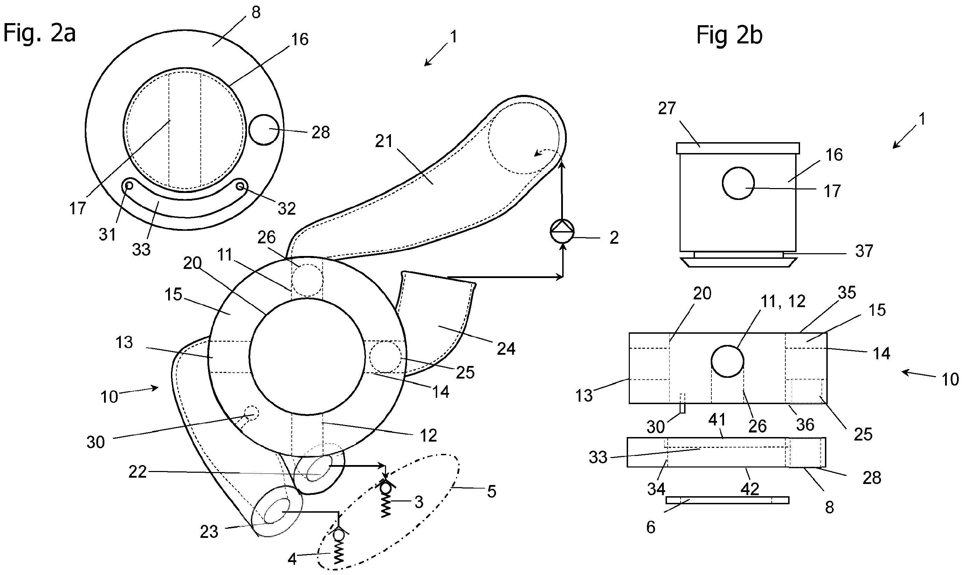

Fig. 2a zeigt ein Ventilgehäuse 10 einer Ventilanordnung 1 gemäss eines zweiten Ausführungsbeispiels, welches ein Drehelement 16 sowie ein in das Drehelement 16 integriertes Schliesselement 8 sowie ein Hülsenelement 15 enthält. Die genannten Bauelemente dieser Ventilanordnung 1 sind in einer Ansicht von oben gezeigt. Das Drehelement 16 ist in der vorliegenden Darstellung mit dem Schliesselement 8 verbunden, welches eine Verbindungsöffnung 28 enthält. Das Schliesselement 8 ist im vorliegenden Ausführungsbeispiel als Scheibenelement ausgebildet.

Die Ventilanordnung 1 enthält ein Ventilgehäuse 10, in welchem das Drehelement 16 und das Hülsenelement 15 enthalten sind. Das Hülsenelement 15 enthält eine Mehrzahl von radialen Öffnungen 11, 12, 13, 14. Eine erste radiale Öffnung 11 ist gegenüberliegend zu einer zweiten radialen Öffnung 12 angeordnet. Eine dritte radiale Öffnung 13 ist gegenüberliegend zu einer vierten radialen Öffnung 14 angeordnet. Das Hülsenelement 15 enthält eine axiale Bohrung 20, in welcher im zusammengebauten Zustand das Drehelement 16 aufgenommen ist. Das Drehelement 16 enthält eine Durchgangsbohrung 17. Das Drehelement 16 ist gemäss dieses Ausführungsbeispiels als ein im Wesentlichen zylinderförmiges Bauelement ausgebildet. Die Durchgangsbohrung 17 erstreckt sich in radialer Richtung.

Das Drehelement 16 ist im Hülsenelement 15 derart drehbar, dass die Durchgangsbohrung 17 entweder mit der ersten radialen Öffnung 11 und zweiten radialen Öffnung 12 in fluidleitender Verbindung steht oder mit der dritten radialen Öffnung 13 und der vierten radialen Öffnung 14 in fluidleitender Verbindung steht oder mit keiner der ersten, zweiten, dritten oder vierten radialen Öffnung 11, 12, 13, 14 in fluidleitender Verbindung steht. Die erste radiale Öffnung 11 ist über eine erste Fluidleitung 21 zur Verbindung mit einem Ausgang einer Pumpe 2 ausgebildet. Die zweite radiale Öffnung 12 ist mit einer zweiten Fluidleitung 22 verbindbar. Die dritte radiale Öffnung 13 ist mit einer dritten Fluidleitung 23 verbindbar. Die vierte radiale Öffnung 14 ist mit einer vierten Fluidleitung 24 verbindbar, wobei die vierte Fluidleitung 24 zur Verbindung mit einem Eingang der Pumpe 2 ausgebildet ist.

Gemäss des in Fig. 2a dargestellten Ausführungsbeispiels steht die erste radiale Öffnung 11 über die Durchgangsbohrung 17 mit der zweiten radialen Öffnung 12 in fluidleitender Verbindung, sodass ein Fluid, welches von der Pumpe 2 gefördert wird, von der ersten Fluidleitung 21 in die erste Öffnung 11, anschliessend in die Durchgangsbohrung 17 und von dort in die zweite Öffnung 12 gefördert wird und von der zweiten Öffnung 12 in die zweite Fluidleitung 22 gelangt. Die zweite Fluidleitung 22 ist zur Verbindung mit einem Einlass eines Behälters 5, welcher als Fluidsenke ausgebildet ist, ausgebildet.

Der Behälter 5 kann ein erstes Rückschlagventil 3 enthalten, welches sich im geöffneten Zustand befindet, zumindest, solange der Behälter mit der zweiten Fluidleitung 22 in fluidleitendem Kontakt ist. Die Ventilanordnung 1 kann ein Andockelement umfassen, mittels welchem das Rückschlagventil 3 in geöffnetem Zustand haltbar ist, wenn sich das Drehelement 16 in der ersten Stellung befindet. In der ersten Stellung des Drehelements 16 ist somit die erste Öffnung 11 mit der ersten Fluidleitung 21 verbunden. Die erste Öffnung 11 steht mit der Durchgangsbohrung 17 in fluidleitender Verbindung. Die zweite Öffnung 12 ist mit der Durchgangsbohrung 17 zur Förderung eines Fluids in die zweite Fluidleitung 22 verbunden. Das Fluid wird mittels der Pumpe 2 gefördert, wenn diese in Betrieb ist.

Gemäss des vorliegenden Ausführungsbeispiels enthält das Hülsenelement 15 ein Kontaktelement 30, beispielsweise ein Kontaktelement aus einem elektrisch leitfähigen Material, beispielsweise einen Metallstift. Das Kontaktelement 30 befindet sich gemäss dieses Ausführungsbeispiels auf der dem Schliesselement 8 gegenüberliegenden Seite des Hülsenelements 15, sodass es in der vorliegenden Darstellung nicht sichtbar ist, da diese Darstellung eine Ansicht auf das Hülsenelement 15 von oben zeigt. Das Kontaktelement 30 wird in einem Kontaktaufnahmeelement 33 geführt, welches sich auf dem Schliesselement 8 befindet. Das Schliesselement 8 ist mit dem Drehelement 16 drehfest verbunden, das heisst, das Schliesselement 8 führt eine Drehbewegung gemeinsam mit dem Drehelement 16 aus. Wenn das Drehelement 16 von der ersten in die zweite oder dritte Stellung bewegt wird, kann das Kontaktelement 30 des in Bezug auf das Drehelement 16 ortsfesten Hülsenelements 15 im Kontaktaufnahmeelement 33 verschoben werden. Das Kontaktaufnahmeelement 33 ist insbesondere als ein Kanal ausgebildet.

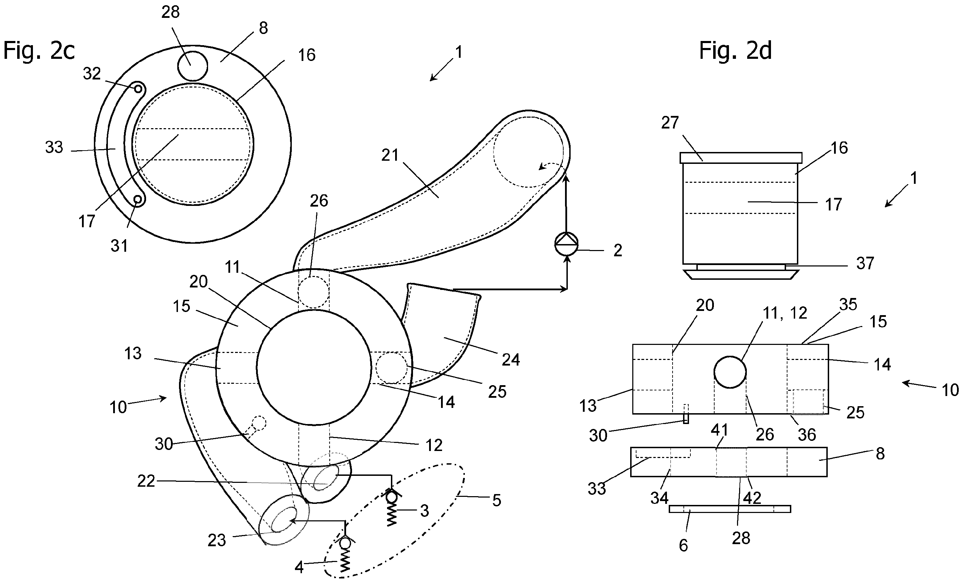

Das Kontaktaufnahmeelement 33 gemäss dieses Ausführungsbeispiels enthält einen ersten Kontaktbereich 31 und einen zweiten Kontaktbereich 32. Die ersten und zweiten Kontaktbereiche 31, 32 befinden sich vorzugsweise in den ersten und zweiten Endbereichen des Kontaktaufnahmeelements 33. Wenn sich das Drehelement 16 in der ersten Stellung befindet, ist das Kontaktelement 30 in Kontakt mit dem ersten Kontaktbereich 31 des Kontaktaufnahmeelements 33. Der erste und zweite Kontaktbereich 31, 32 kann jeweils ein elektrisch leitfähiges Material enthalten, sodass bei einem Kontakt mit dem Kontaktelement 30 ein elektrischer Strom fliessen kann. Somit kann die Pumpe 2 in Betrieb genommen werden, wenn ein elektrischer Kontakt zwischen dem Kontaktelement 30 und dem entsprechenden ersten Kontaktbereich 31 oder zweiten Kontaktbereich 32 des Kontaktaufnahmeelements 33 besteht, das heisst entweder in der in Fig. 2a und Fig. 2b dargestellten ersten Stellung oder in der in Fig. 2c und Fig. 2d dargestellten zweiten Stellung des Drehelements 16.

Wenn sich somit das Drehelement 16 in der ersten Stellung befindet, wird die Pumpe 2 in Betrieb genommen. Das Schliesselement 8 wird derart mit dem Drehelement 16 mitbewegt, dass dessen Verbindungsöffnung 28 mit einer im Hülsenelement 15 angeordneten Zulaufleitung 25 fluchtet. Die Zulaufleitung 25 steht mit der vierten radialen Öffnung 14 in fluidleitender Verbindung, sodass ein Fluid aus der Umgebung oder aus einer am Schliesselement 8 angebrachten Fluidleitung in die vierte radiale Öffnung 14 gelangen kann. Von der vierten radialen Öffnung 14 gelangt das Fluid in die vierte Fluidleitung 24, die gemäss dieses Ausführungsbeispiels mit einem Einlass der Pumpe 2 in fluidleitender Verbindung steht.

Wenn somit die Verbindungsöffnung 28 des ersten Schliesselements 18 geöffnet ist, steht die Zulaufleitung 25 mit einer Fluidquelle in Verbindung. Wenn die Ventilanordnung 1 zum Betrieb mit Luft ausgebildet ist, steht die Zulaufleitung 25 bei geöffneter Verbindungsöffnung 28 mit der Umgebungsluft in fluidleitender Verbindung. Wenn die Pumpe 2 in Betrieb ist, wird somit das Fluid von der Fluidquelle (nicht dargestellt) in die vierte Fluidleitung 24 gefördert. Die Pumpe 2 wird mit dem aus der vierten Fluidleitung 24 stammenden Fluid gespeist und fördert das Fluid in die erste Fluidleitung 21. Die erste Fluidleitung 21 steht mit der ersten radialen Öffnung 11, der Durchgangsbohrung 17 des Drehelements 16, der zweiten radialen Öffnung 12 sowie der zweiten Fluidleitung 22 in fluidleitender Verbindung. Von der zweiten Fluidleitung 22 gelangt das Fluid als Druckfluid in den Behälter 5.

Die dritte Fluidleitung 23 und die dritte radiale Öffnung 13 ist in der ersten Stellung des Drehelements 16 geschlossen. Die Ablauföffnung 26 ist durch das Schliesselement 8 verschlossen, sodass das von der Pumpe 2 in die erste Fluidleitung 21 geförderte Fluid nur in die erste radiale Öffnung 11 und von dort in die Durchgangsbohrung 17 strömen kann.

Der Behälter 5 weist gemäss des vorliegenden Ausführungsbeispiels ein erstes Rückschlagventil 3 und ein zweites Rückschlagventil 4 auf. Die ersten und zweiten Rückschlagventile 3, 4 können mittels eines Andockelements in geöffneter Stellung gehalten werden, solange der Behälter 4 an die Ventilanordnung 1 gekoppelt ist. Der Behälter 5 kann von der Ventilanordnung 1 abgekoppelt werden, wenn er mit Fluid befüllt ist. Die Rückschlagventile 3, 4 nehmen nach der Abkopplung von der Ventilanordnung 1 eine geschlossene Stellung ein, sodass das Fluid nicht aus dem Behälter 5 entweichen kann, wenn der Behälter 5 abgekoppelt ist.

Wenn der Behälter 5 nach Abschluss der Befüllung mit der Ventilanordnung 1 verbunden bleiben soll, kann das Drehelement 16 in eine dritte Stellung bewegt werden, die zwischen der ersten und der nachfolgend beschriebenen zweiten Stellung liegt. Gemäss des vorliegenden Ausführungsbeispiels wird das Drehelement 16 um ungefähr 45 Grad gedreht.

In Fig. 2a ist die Strömungsrichtung des durch die Zulaufleitung 25, die vierte Fluidleitung 24, die Pumpe 2, die erste Fluidleitung 21, die erste radiale Öffnung 11, die Durchgangsbohrung 17 und die zweite radiale Öffnung 12 durch Pfeile gekennzeichnet. In Fluidleitungen, die keine Pfeile enthalten oder zu denen keine Pfeile führen oder von denen keine Pfeile wegführen, strömt kein Fluid.

Fig. 2b zeigt eine Explosionszeichnung des in Fig. 2a dargestellten Ausführungsbeispiels der Ventilanordnung 1 in einer Ansicht von vorne in der ersten Stellung.

Das Drehelement 16 ist als ein im Wesentlichen zylinderförmiger Körper ausgebildet, welcher eine Durchgangsbohrung 17 aufweist, die sich in radialer Richtung erstreckt. Das Drehelement 16 enthält einen Anschlag 27 zur Auflage auf dem Hülsenelement 15. Das Drehelement 16 enthält eine Aussparung 37, die als eine umlaufende Nut ausgebildet ist. Die Aussparung 37 dient der Aufnahme eines Halteelements 6.

Das Hülsenelement 15 ist ebenfalls als zylinderförmiger ringförmiger Körper ausgebildet, der eine axiale Bohrung 20 enthält. Das Hülsenelement 15 enthält eine erste radiale Öffnung 11, eine zweite radiale Öffnung 12, eine dritte radiale Öffnung 13 sowie eine vierte radiale Öffnung 14. Sämtliche radialen Öffnungen 11, 12, 13, 14 erstrecken sich als Durchgangsbohrungen von der axialen Bohrung 20 zu der äusseren Mantelfläche des Hülsenelements 15. Von der vierten radialen Öffnung 14 zweigt eine Zulaufleitung 25 ab. Die Zulaufleitung 25 verläuft im Inneren des zylinderförmigen ringförmigen Körpers und endet an einer zweiten Stirnfläche 36 des Hülsenelements 15. Gemäss des vorliegenden Ausführungsbeispiels verläuft die Zulaufleitung 25 parallel zur axialen Bohrung 20 in axialer Richtung. Von der ersten radialen Öffnung 11 zweigt eine Ablaufleitung 26 ab. Die Ablaufleitung 26 verläuft im Inneren des zylinderförmigen ringförmigen Körpers und endet an einer zweiten Stirnfläche 36 des Hülsenelements 15. Gemäss des vorliegenden Ausführungsbeispiels verläuft die Ablaufleitung 26 parallel zur axialen Bohrung 20 in axialer Richtung.

Das Hülsenelement 15 enthält ferner ein Kontaktelement 30. Dieses Kontaktelement 30 ist gemäss des vorliegenden Ausführungsbeispiels als ein Stiftelement ausgebildet, welches die zweite Stirnfläche 36 ein Stück überragt. Das Kontaktelement 30 ist im eingebauten Zustand mit einem Kontaktaufnahmeelement 33 in Eingriff, welches im Schliesselement 8 angeordnet ist. Das Kontaktelement 30 steht über eine nicht dargestellte Signalleitung mit einer Schaltvorrichtung der Pumpe 2 in Kontakt, sodass die Pumpe 2 je nach Position des Kontaktelements 30 im Kontaktaufnahmeelement 33 ein- oder ausgeschaltet werden kann. Insbesondere wird die Pumpe eingeschaltet, wenn sich das Kontaktelement 30 im ersten Kontaktbereich 31 oder im zweiten Kontaktbereich 32 befindet, siehe hierzu Fig. 2a.

Das Schliesselement 8 ist als zylinderförmiger ringförmiger Körper ausgebildet. Das Schliesselement 8 enthält ebenfalls eine axiale Bohrung 34. Die axiale Bohrung 34 verläuft koaxial zur Mittenachse des Stirnelements 8 von dessen erster Stirnfläche 41 zu dessen zweiter Stirnfläche 42. Der Innendurchmesser der axialen Bohrung 34 entspricht dem Innendurchmesser der axialen Bohrung 20 des Hülsenelements 15 und entspricht im Wesentlichen dem Aussendurchmesser des Mantelelements des Drehelements 16. Das Schliesselement 8 enthält eine Verbindungsöffnung 28, die sich von der ersten Stirnseite 41 zur zweiten Stirnseite 42 erstreckt. Die Verbindungsöffnung 28 ist somit ebenfalls als eine in axialer Richtung verlaufende Durchgangsbohrung ausgebildet, die parallel zur axialen Bohrung 34 verläuft.

Im zusammengebauten Zustand befindet sich das Hülsenelement 15 und das Schliesselement 8 auf dem Drehelement 16. Die erste Stirnfläche 35 des Hülsenelements 15 liegt am Anschlag 27 des Drehelements 16 an. Die erste Stirnfläche 41 des Schliesselements 8 liegt auf der zweiten Stirnfläche 36 des Hülsenelements 15 auf. Das Schliesselement 8 und das Hülsenelement 15 werden auf dem Drehelement 16 durch ein Halteelement 6 gehalten, welches in der Aussparung 37 des Drehelements 16 aufgenommen ist. Das Halteelement 6 ist gemäss des vorliegenden Ausführungsbeispiels als Ringelement ausgebildet. Der Aussendurchmesser des Halteelements 6 ist grösser als der Innendurchmesser der axialen Bohrung 34 des Schliesselements 8. Das Halteelement 6 kann beispielsweise als geschlitzter Metallring ausgebildet sein oder ein dehnbares Material enthalten, sodass er über den konischen Endbereich des unteren Endes des Drehelements 16gestülpt werden kann.

Das Schliesselement 8 ist drehfest mit dem Drehelement 16 verbunden, das heisst, das Schliesselement 8 bewegt sich mit dem Drehelement 16 mit, wenn es in eine andere Stellung gedreht wird. Das Schliesselement 8 kann formschlüssig oder kraftschlüssig mit dem Drehelement 16 verbunden sein. Die Länge des Hülsenelements 15 und die Länge des Schliesselements 8 können etwas grösser sein als der Abstand zwischen dem Anschlag 27 und der Aussparung 37 des Drehelements, sodass das Halteelement 6 das Hülsenelement 15 und das Schliesselement 8 gegen den Anschlag 27 drückt. Hierdurch kann eine verbesserte Abdichtung gegen allfällige Leckagen erzielt werden.

Zusätzlich können zur Abdichtung in dieser Darstellung nicht gezeigte Dichtungselemente vorgesehen werden, die eine Fluidströmung ausserhalb der hierfür vorgesehenen Wege verhindern.

Fig. 2c zeigt die Ventilanordnung 1 gemäss Fig. 2a, wenn der Behälter 5 als Fluidquelle ausgebildet ist. Gemäss dieses Ausführungsbeispiels soll der Behälter 5 entleert werden. Zu diesem Zweck wird das Drehelement 16 im Hülsenelement 15 um einen Winkel gedreht, der im vorliegenden Ausführungsbeispiel 90 Grad beträgt. Das Drehelement 16 befindet sich somit in der zweiten Stellung.

In der in Fig. 2c gezeigten zweiten Stellung des Drehelements 16 ist die dritte radiale Öffnung 13 über die Durchgangsbohrung 17 mit der vierten radialen Öffnung 14 verbunden, sodass Fluid über die dritte Fluidleitung 23 vom Behälter 5 in die dritte radiale Öffnung 13 einströmen kann. Die Rückschlagventile 3, 4 befinden sich in der geöffneten Stellung, wenn der Behälter 5 mit der Ventilanordnung 1 verbunden ist. Das Fluid aus dem Behälter 5 kann von der dritten radialen Öffnung 13 in die Durchgangsbohrung 17 und von der Durchgangsbohrung 17 in die vierte radiale Öffnung 14 strömen. Die vierte radiale Öffnung 14 ist mit der vierten Fluidleitung 24 in fluidleitender Verbindung, welche wiederum mit dem Einlass der Pumpe 2 in Verbindung ist. Die Zulaufleitung 25 ist durch das Schliesselement 8 geschlossen, sodass das Fluid vom Behälter 5 von der Pumpe 2 angesaugt werden kann. Die Pumpe 2 fördert nunmehr das Fluid aus dem Behälter 5, sodass der Behälter 5 wesentlich schneller entleert werden kann als durch Austritt des Fluids in die Umgebung durch das geöffnete zweite Rückschlagventil 4.

Da die Zulauföffnung 25 in der zweiten Stellung durch das erste Schliesselement 8 verschlossen ist, wird somit das Fluid von der Pumpe 2 in die erste Fluidleitung 21 gefördert, von wo es in die erste radiale Öffnung 11 einströmt und von dort in die Ablaufleitung 26 einströmt. Die Verbindungsöffnung 28 des Schliesselements 8 überlappt mit der Austrittsöffnung der Ablaufleitung 26, sodass das Fluid die Ventilanordnung 1 durch die Verbindungsöffnung 28 verlassen kann.

Fig. 2d zeigt eine Explosionszeichnung des in Fig. 2c dargestellten Ausführungsbeispiels der Ventilanordnung 1 in einer Ansicht von vorne in der zweiten Stellung. Das Drehelement 16, das Hülsenelement 15, das Schliesselement 8 und das Halteelement 6 sind gleich aufgebaut wie in der Darstellung in Fig. 2b, sodass auf die Beschreibung in Fig. 2b verwiesen werden kann, die in analoger Weise auf die Darstellung gemäss Fig. 2d anwendbar ist.

Das Drehelement 16 kann eine dritte Stellung einnehmen, welche sich zwischen der ersten und der zweiten Stellung befindet, was zeichnerisch nicht dargestellt ist. In der dritten Stellung ist keine der radialen Öffnungen 11, 12, 13, 14 über die Durchgangsbohrung 17 verbunden, sodass kein Fluid strömen kann. Die Rückschlagventile 3, 4 befinden sich in der geöffneten Stellung, wenn der Behälter 5 mit der Ventilanordnung 1 verbunden ist. Das Fluid aus dem Behälter 5 kann nicht weiter als bis zur zweiten radialen Öffnung 12 bzw. der dritten radialen Öffnung 13 gelangen. Daher bleibt sämtliches im Behälter 5 befindliches Fluid im Innenraum desselben. Wenn es sich bei dem Behälter um einen aufblasbaren Gegenstand handelt, verharrt der aufblasbare Gegenstand im aufgeblasenen Zustand. Die Pumpe 2 ist in dieser Stellung nicht in Betrieb. Die Durchgangsbohrung 17 befindet sich in einer Zwischenposition, das Drehelement 16 wurde um einen Winkel von 45 Grad in Bezug auf eine der in Fig. 2a oder Fig. 2c gezeigten Stellungen gedreht. Das Kontaktelement 30 befindet sich im Kontaktaufnahmeelement 33 in einer Zwischenposition, die zwischen dem ersten Kontaktbereich 31 und dem zweiten Kontaktbereich 32 liegt.

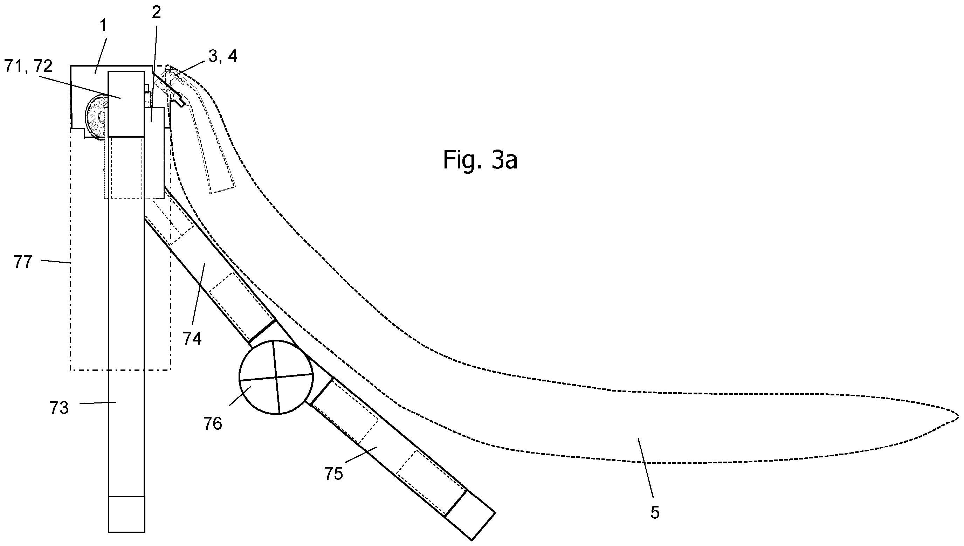

Fig. 3a zeigt ein Anwendungsbeispiel für eine Ventilanordnung nach einem der vorhergehenden Ausführungsbeispiele für eine aufblasbare Liege. Der Behälter 5 ist gemäss dieses Anwendungsbeispiels als aufblasbare Matratze ausgebildet. In der Matratze sind ein erstes und zweites Rückschlagventil 3, 4 angeordnet. Die ersten und zweiten Rückschlagventile werden mittels eines Andockelements der Ventilanordnung 1 in geöffnetem Zustand gehalten, was in der vorliegenden Darstellung nicht sichtbar ist. Die Ventilanordnung 2 und die Pumpe 2 sind mit einem Gestell 7 verbunden, welches mindestens zwei Flügelelemente 71, 72 aufweisen kann sowie damit lösbar verbundene Ständerelemente 73 aufweisen kann. Das Ständerelement 73 kann als Stangenelement ausgebildet sein. Mehrere Stangenelemente können vorgesehen sein, die ineinander einsteckbar sein können, um die Höhe der Liege entsprechend den Bedürfnissen des Benutzers anzupassen.

Zudem können Stützelemente 74, 75 vorgesehen sein, die über ein Gelenkelement 76miteinander koppelbar sein können. Das Stützelement 74 ist mit einem der ersten oder zweiten Flügelelemente 71, 72 koppelbar, das Stützelement 75 ist über das Gelenkelement 76 mit dem Stützelement 74 verbunden. Zusätzlich kann eine Transporttasche 77 vorgesehen sein, die nur schematisch angedeutet ist.

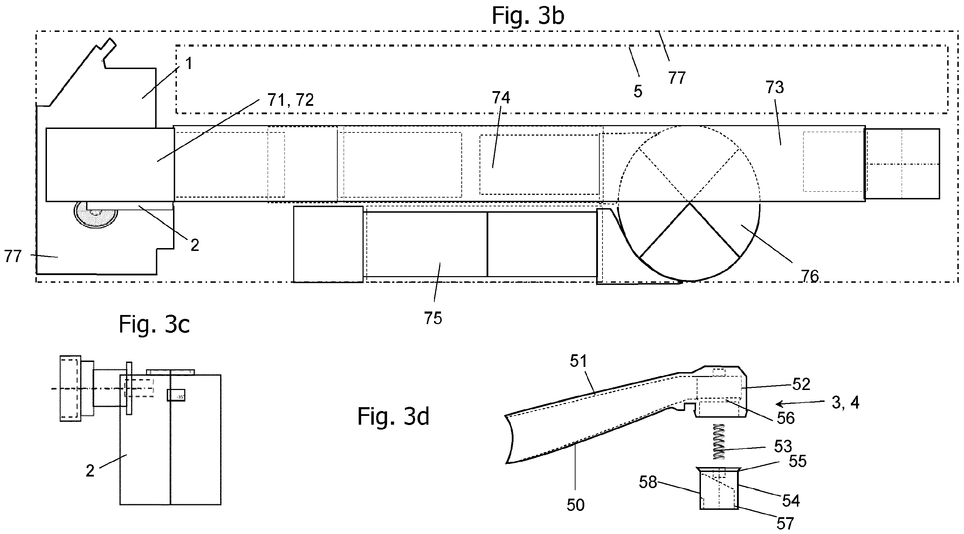

Fig. 3b zeigt die aufblasbare Liege im Transportzustand, in welchem die Liege, das zugehörige Gestell 7, die Ventilanordnung 1 sowie die Pumpe 2 in einer Transporttasche 77 aufgenommen sind. Gemäss dieses Ausführungsbeispiels ist somit eine aufblasbare Liege sehr einfach an einen beliebigen Ort transportierbar. Die Ventilanordnung 1 und die Pumpe 2 sind über die Flügelelemente 71, 72 mit dem Gestell 7 verbunden, sodass die Liege an jedem beliebigen Ort in Betrieb genommen werden kann. Die Liege ist als aufblasbarer Gegenstand nur schematisch dargestellt, sie kann in zusammengefaltetem Zustand transportiert werden.

Fig. 3c zeigt ein Ausführungsbeispiel für eine handelsübliche Pumpe 2. Die Pumpe 2 enthält einen Einlass und einen Auslass, der an die in den vorhergehenden Ausführungsbeispielen gezeigten ersten und vierten Fluidleitungen 21, 24 ankoppelbar ist, siehe insbesondere Fig. 2a bis Fig. 2d.

Fig. 3d zeigt ein Ausführungsbeispiel eines Rückschlagventils 3, 4, welches Bestandteil des Behälters 5 sein kann. Das Rückschlagventil ist in einem Gehäuseelement 50 angeordnet, welches einen Fluidkanal 51 enthält. Der Fluidkanal 51 mündet in eine Aufnahmeöffnung 52, welche zur Aufnahme eines Federelements 53 und eines Schieberelements 54 dient. Fig. 3d zeigt das Federelement 53 und das Schieberelement 54 in explosionsartiger Darstellung. Das Schieberelement 54 ist in der Aufnahmeöffnung 52 verliersicher gelagert, indem dessen Absatz 55 auf einem entsprechenden Sitz 56 der Aufnahmeöffnung 52 gelagert ist. Das Federelement 53 hält das Schieberelement 54 auf seinem Sitz. In dieser Position ist das Rückschlagventil geschlossen.

Das Schieberelement 54 enthält ebenfalls einen Fluidkanal 57. Der Fluidkanal 57 verläuft von der unteren Endfläche des Schieberelements 54 koaxial zur Mittenachse des Schieberelements und mündet in eine radial angeordnete Austrittsöffnung 58. Diese Austrittsöffnung 58 wird bei einer Kompression des Federelements 53 derart verschoben, dass sie in der Aufnahmeöffnung 52 in Kontakt mit dem in die Aufnahmeöffnung 52 einmündenden Fluidkanal 51 kommt. Wenn das Schieberelement 57 durch ein nicht dargestelltes Andockelement in die Aufnahmeöffnung 52 eingeschoben wird, wird somit das Rückschlagventil geöffnet. Solange das Rückschlagventil 3, 4 somit im Kontakt mit der Ventilanordnung 1 ist (hier nicht dargestellt) besteht eine fluidleitende Verbindung zwischen dem Fluidkanal 57 und dem Fluidkanal 51.

Der Behälter 5 kann in dieser Stellung mit Fluid befüllt werden oder Fluid kann aus dem Behälter 5 entnommen werden. Wird die Ventilanordnung und damit das Andockelement entfernt, entspannt sich das Federelement 53 und drückt das Schieberelement 54 auf den Sitz 56. Der Fluiddurchgang ist somit unterbrochen, allfälliges im Behälter 5 befindliches Fluid bleibt im Behälter. Wenn das Fluid im Behälter unter Druck steht, wird das Schieberelement 54 zusätzlich durch den Innendruck des im Behälter 5 befindlichen Fluids auf seinen Sitz 56 gedrückt. Der Behälter kann somit einfach von der Ventilanordnung 1 getrennt werden. Wenn es sich bei dem Behälter 5 um eine Liege handelt, kann diese Liege beispielsweise als Luftmatratze für den Einsatz im Wasser verwendet werden.

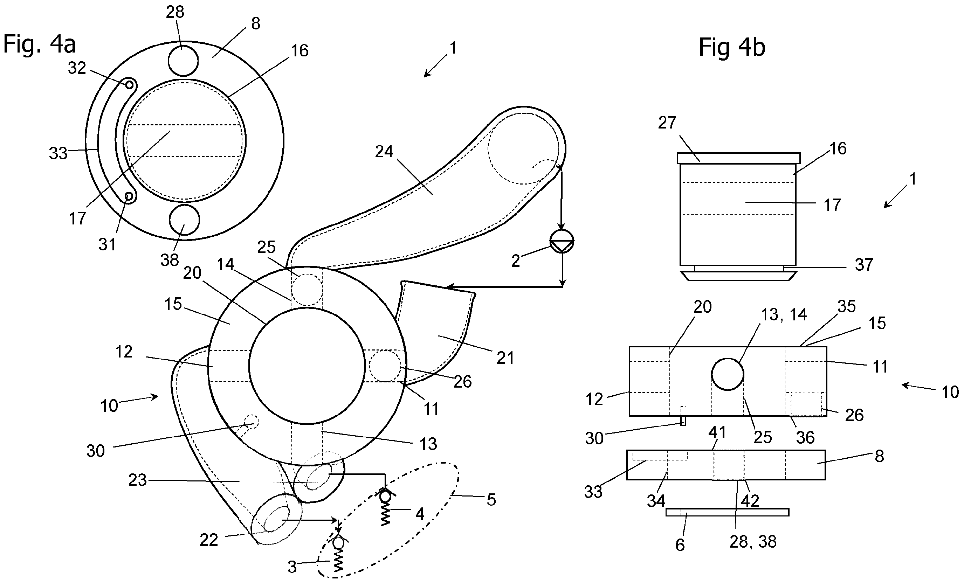

Fig. 4a zeigt ein Ventilgehäuse 10 einer Ventilanordnung 1 gemäss eines dritten Ausführungsbeispiels wobei für gleiche oder gleich wirkende Elemente dieselben Bezugszeichen verwendet werden, wie in den vorhergehenden Ausführungsbeispielen. Die Ventilanordnung 1 enthält ein Drehelement 16 sowie ein in das Drehelement 16 integriertes Schliesselement 8 sowie ein Hülsenelement 15. Die genannten Bauelemente dieser Ventilanordnung 1 sind in einer Ansicht von oben gezeigt. Das Drehelement 16 ist in der vorliegenden Darstellung mit dem Schliesselement 8 verbunden, welches eine erste Verbindungsöffnung 28 und eine zweite Verbindungsöffnung 38 enthält. Das Schliesselement 8 ist im vorliegenden Ausführungsbeispiel als ein Scheibenelement ausgebildet.

Die Ventilanordnung 1 enthält ein Ventilgehäuse 10, in welchem das Drehelement 16 und das Hülsenelement 15 enthalten sind. Das Hülsenelement 15 enthält eine Mehrzahl von radialen Öffnungen 11, 12, 13, 14. Eine erste radiale Öffnung 11 ist gegenüberliegend zu einer zweiten radialen Öffnung 12 angeordnet. Eine dritte radiale Öffnung 13 ist gegenüberliegend zu einer vierten radialen Öffnung 14 angeordnet. Das Hülsenelement 15 enthält eine axiale Bohrung 20, in welcher im zusammengebauten Zustand das Drehelement 16 aufgenommen ist. Das Drehelement 16 enthält eine Durchgangsbohrung 17. Das Drehelement 16 ist gemäss dieses Ausführungsbeispiels als ein im Wesentlichen zylinderförmiges Bauelement ausgebildet. Die Durchgangsbohrung 17 erstreckt sich in radialer Richtung.

Das Drehelement 16 ist im Hülsenelement 15 derart drehbar, dass die Durchgangsbohrung 17 entweder mit der ersten radialen Öffnung 11 und zweiten radialen Öffnung 12 in fluidleitender Verbindung steht oder mit der dritten radialen Öffnung 13 und der vierten radialen Öffnung 14 in fluidleitender Verbindung steht oder mit keiner der ersten, zweiten, dritten oder vierten radialen Öffnung 11, 12, 13, 14 in fluidleitender Verbindung steht. Die erste radiale Öffnung 11 ist über eine erste Fluidleitung 21 zur Verbindung mit einem Ausgang einer Pumpe 2 ausgebildet. Die zweite radiale Öffnung 12 ist mit einer zweiten Fluidleitung 22 verbindbar. Die dritte radiale Öffnung 13 ist mit einer dritten Fluidleitung 23 verbindbar. Die vierte radiale Öffnung 14 ist mit einer vierten Fluidleitung 24 verbindbar, wobei die vierte Fluidleitung 24 zur Verbindung mit einem Eingang der Pumpe 2 ausgebildet ist.

Gemäss Fig. 4a steht die erste radiale Öffnung 11 über die Durchgangsbohrung 17 mit der zweiten radialen Öffnung 12 in fluidleitender Verbindung, sodass ein Fluid, welches von der Pumpe 2 gefördert wird, von der ersten Fluidleitung 21 in die erste Öffnung 11, anschliessend in die Durchgangsbohrung 17 und von dort in die zweite Öffnung 12 gefördert wird und von der zweiten Öffnung 12 in die zweite Fluidleitung 22 gelangt. Die zweite Fluidleitung 22 ist zur Verbindung mit einem Einlass eines Behälters 5, welcher als Fluidsenke ausgebildet ist, ausgebildet.

Der Behälter 5 kann ein erstes Rückschlagventil 3 enthalten, welches sich im geöffneten Zustand befindet, zumindest, solange der Behälter 5 mit der zweiten Fluidleitung 22 in fluidleitendem Kontakt ist. Die Ventilanordnung 1 kann ein Andockelement umfassen, mittels welchem das Rückschlagventil 3 in geöffnetem Zustand haltbar ist, wenn sich das Drehelement 16 in der ersten Stellung befindet. In der ersten Stellung des Drehelements 16 ist somit die erste Öffnung 11 mit der ersten Fluidleitung 21 verbunden. Die erste Öffnung 11 steht mit der Durchgangsbohrung 17 in fluidleitender Verbindung. Die zweite Öffnung 12 ist mit der Durchgangsbohrung 17 zur Förderung eines Fluids in die zweite Fluidleitung 22 verbunden. Das Fluid wird mittels der Pumpe 2 gefördert, wenn diese in Betrieb ist.

Gemäss des vorliegenden Ausführungsbeispiels enthält das Hülsenelement 15 ein Kontaktelement 30, beispielsweise ein Kontaktelement aus einem elektrisch leitfähigen Material, beispielsweise einen Metallstift. Das Kontaktelement 30 befindet sich gemäss dieses Ausführungsbeispiels auf der dem Schliesselement 8 gegenüberliegenden Seite des Hülsenelements 15, sodass es in der vorliegenden Darstellung nicht sichtbar ist, da diese Darstellung eine Ansicht auf das Hülsenelement 15 von oben zeigt. Das Kontaktelement 30 wird in einem Kontaktaufnahmeelement 33 geführt, welches sich auf dem Schliesselement 8 befindet. Das Schliesselement 8 ist mit dem Drehelement 16 drehfest verbunden, das heisst, das Schliesselement 8 führt eine Drehbewegung gemeinsam mit dem Drehelement 16 aus. Wenn das Drehelement 16 von der ersten in die zweite oder dritte Stellung bewegt wird, kann das Kontaktelement 30 des in Bezug auf das Drehelement 16 ortsfesten Hülsenelements 15 im Kontaktaufnahmeelement 33 verschoben werden. Das Kontaktaufnahmeelement 33 ist insbesondere als ein Kanal ausgebildet.

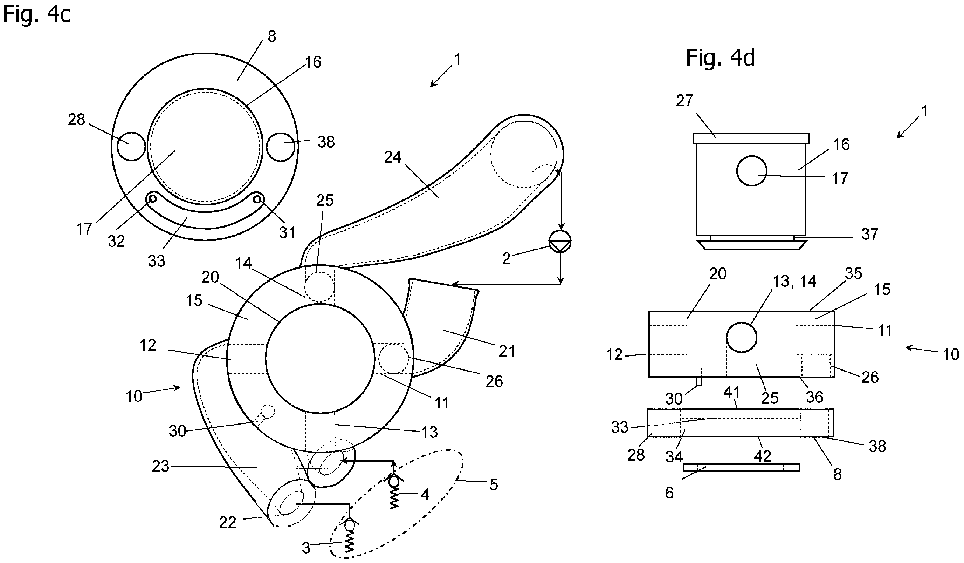

Das Kontaktaufnahmeelement 33 gemäss dieses Ausführungsbeispiels enthält einen ersten Kontaktbereich 31 und einen zweiten Kontaktbereich 32. Die ersten und zweiten Kontaktbereiche 31, 32 befinden sich vorzugsweise in den ersten und zweiten Endbereichen des Kontaktaufnahmeelements 33. Wenn sich das Drehelement 16 in der ersten Stellung befindet, ist das Kontaktelement 30 in Kontakt mit dem ersten Kontaktbereich 31 des Kontaktaufnahmeelements 33. Der erste und zweite Kontaktbereich 31, 32 kann jeweils ein elektrisch leitfähiges Material enthalten, sodass bei einem Kontakt mit dem Kontaktelement 30 ein elektrischer Strom fliessen kann. Somit kann die Pumpe 2 in Betrieb genommen werden, wenn ein elektrischer Kontakt zwischen dem Kontaktelement 30 und dem entsprechenden ersten Kontaktbereich 31 oder zweiten Kontaktbereich 32 des Kontaktaufnahmeelements 33 besteht, das heisst entweder in der in Fig. 4a und Fig. 4b dargestellten ersten Stellung oder in der in Fig. 4c und Fig. 4d dargestellten zweiten Stellung des Drehelements 16.

Wenn sich somit das Drehelement 16 in der ersten Stellung befindet, wird die Pumpe 2 in Betrieb genommen. Das Schliesselement 8 wird derart mit dem Drehelement 16 mitbewegt, dass dessen erste Verbindungsöffnung 28 mit einer im Hülsenelement 15 angeordneten Zulaufleitung 25 fluchtet. Die Zulaufleitung 25 steht mit der vierten radialen Öffnung 14 in fluidleitender Verbindung, sodass ein Fluid aus der Umgebung oder aus einer am Schliesselement 8 angebrachten Fluidleitung in die vierte radiale Öffnung 14 gelangen kann. Von der vierten radialen Öffnung 14 gelangt das Fluid in die vierte Fluidleitung 24, die gemäss dieses Ausführungsbeispiels mit einem Einlass der Pumpe 2 in fluidleitender Verbindung steht.

Wenn somit die Verbindungsöffnung 28 des ersten Schliesselements 8 geöffnet ist, steht die Zulaufleitung 25 mit einer Fluidquelle in Verbindung. Wenn die Ventilanordnung 1 zum Betrieb mit Luft ausgebildet ist, steht die Zulaufleitung 25 bei geöffneter erster Verbindungsöffnung 28 mit der Umgebungsluft in fluidleitender Verbindung. Wenn die Pumpe 2 in Betrieb ist, wird somit das Fluid von der Fluidquelle (nicht dargestellt) in die vierte Fluidleitung 24 gefördert. Die Pumpe 2 wird mit dem aus der vierten Fluidleitung 24 stammenden Fluid gespeist und fördert das Fluid in die erste Fluidleitung 21. Die erste Fluidleitung 21 steht mit der ersten radialen Öffnung 11, der Durchgangsbohrung 17 des Drehelements 16, der zweiten radialen Öffnung 12 sowie der zweiten Fluidleitung 22 in fluidleitender Verbindung. Von der zweiten Fluidleitung 22 gelangt das Fluid als Druckfluid in den Behälter 5.

Die dritte Fluidleitung 23 und die dritte radiale Öffnung 13 ist in der ersten Stellung des Drehelements 16 geschlossen. Die Ablauföffnung 26 ist durch das Schliesselement 8 verschlossen, sodass das von der Pumpe 2 in die erste Fluidleitung 21 geförderte Fluid nur in die erste radiale Öffnung 11 und von dort in die Durchgangsbohrung 17 strömen kann.

Der Behälter 5 weist gemäss des vorliegenden Ausführungsbeispiels ein erstes Rückschlagventil 3 und ein zweites Rückschlagventil 4 auf. Die ersten und zweiten Rückschlagventile 3, 4 können mittels eines Andockelements in geöffneter Stellung gehalten werden, solange der Behälter 4 an die Ventilanordnung 1 gekoppelt ist. Der Behälter 5 kann von der Ventilanordnung 1 abgekoppelt werden, wenn er mit Fluid befüllt ist. Die Rückschlagventile 3, 4 nehmen nach der Abkopplung von der Ventilanordnung 1 eine geschlossene Stellung ein, sodass das Fluid nicht aus dem Behälter 5 entweichen kann, wenn der Behälter 5 abgekoppelt ist.

Wenn der Behälter 5 nach Abschluss der Befüllung mit der Ventilanordnung 1 verbunden bleiben soll, kann das Drehelement 16 in eine dritte Stellung bewegt werden, die zwischen der ersten und der nachfolgend beschriebenen zweiten Stellung liegt. Gemäss des vorliegenden Ausführungsbeispiels wird das Drehelement 16 um ungefähr 45 Grad gedreht.

In Fig. 4a ist die Strömungsrichtung des durch die Zulaufleitung 25, die vierte Fluidleitung 24, die Pumpe 2, die erste Fluidleitung 21, die erste radiale Öffnung 11, die Durchgangsbohrung 17 und die zweite radiale Öffnung 12 durch Pfeile gekennzeichnet. In Fluidleitungen, die keine Pfeile enthalten oder zu denen keine Pfeile führen oder von denen keine Pfeile wegführen, strömt kein Fluid.

Fig. 4b zeigt eine Explosionszeichnung des in Fig. 4a dargestellten dritten Ausführungsbeispiels der Ventilanordnung 1 in einer Ansicht von vorne in der ersten Stellung.

Das Drehelement 16 ist als ein im Wesentlichen zylinderförmiger Körper ausgebildet, welcher eine Durchgangsbohrung 17 aufweist, die sich in radialer Richtung erstreckt. Das Drehelement 16 enthält einen Anschlag 27 zur Auflage auf dem Hülsenelement 15. Das Drehelement 16 enthält eine Aussparung 37, die als eine umlaufende Nut ausgebildet ist. Die Aussparung 37 dient der Aufnahme eines Halteelements 6.

Das Hülsenelement 15 ist ebenfalls als zylinderförmiger ringförmiger Körper ausgebildet, der eine axiale Bohrung 20 enthält. Das Hülsenelement 15 enthält eine erste radiale Öffnung 11, eine zweite radiale Öffnung 12, eine dritte radiale Öffnung 13 sowie eine vierte radiale Öffnung 14. Sämtliche radialen Öffnungen 11, 12, 13, 14 erstrecken sich als Durchgangsbohrungen von der axialen Bohrung 20 zu der äusseren Mantelfläche des Hülsenelements 15. Von der vierten radialen Öffnung 14 zweigt eine Zulaufleitung 25 ab. Die Zulaufleitung 25 verläuft im Inneren des zylinderförmigen ringförmigen Körpers und endet an einer zweiten Stirnfläche 36 des Hülsenelements 15. Gemäss des vorliegenden Ausführungsbeispiels verläuft die Zulaufleitung 25 parallel zur axialen Bohrung 20 in axialer Richtung. Von der ersten radialen Öffnung 11 zweigt eine Ablaufleitung 26 ab. Die Ablaufleitung 26 verläuft im Inneren des zylinderförmigen ringförmigen Körpers und endet an einer zweiten Stirnfläche 36 des Drehelements 16. Gemäss des vorliegenden Ausführungsbeispiels verläuft die Ablaufleitung 26 parallel zur axialen Bohrung 20 in axialer Richtung.

Das Hülsenelement 15 enthält ferner ein Kontaktelement 30. Dieses Kontaktelement 30 ist gemäss des vorliegenden Ausführungsbeispiels als ein Stiftelement ausgebildet, welches die zweite Stirnfläche 36 ein Stück überragt. Das Kontaktelement 30 ist im eingebauten Zustand mit einem Kontaktaufnahmeelement 33 in Eingriff, welches im Schliesselement 8 angeordnet ist. Das Kontaktelement 30 steht über eine nicht dargestellte Signalleitung mit einer Schaltvorrichtung der Pumpe 2 in Kontakt, sodass die Pumpe 2 je nach Position des Kontaktelements 30 im Kontaktaufnahmeelement 33 ein- oder ausgeschaltet werden kann. Insbesondere wird die Pumpe eingeschaltet, wenn sich das Kontaktelement 30 im ersten Kontaktbereich 31 oder im zweiten Kontaktbereich 32 befindet, siehe hierzu Fig. 4a.

Das Schliesselement 8 ist als zylinderförmiger ringförmiger Körper ausgebildet. Das Schliesselement 8 enthält ebenfalls eine axiale Bohrung 34. Die axiale Bohrung 34 verläuft koaxial zur Mittenachse des Stirnelements 8 von dessen erster Stirnfläche 41 zu dessen zweiter Stirnfläche 42. Der Innendurchmesser der axialen Bohrung 34 entspricht dem Innendurchmesser der axialen Bohrung 20 des Hülsenelements 15 und entspricht im Wesentlichen dem Aussendurchmesser des Mantelelements des Drehelements 16. Das Schliesselement 8 enthält eine erste Verbindungsöffnung 28, die sich von der ersten Stirnseite 41 zur zweiten Stirnseite 42 erstreckt. Das Schliesselement 8 enthält eine zweite Verbindungsöffnung 38, die sich von der ersten Stirnseite 41 zur zweiten Stirnseite 42 erstreckt. Die Verbindungsöffnungen 28, 38 sind somit ebenfalls als in axialer Richtung verlaufende Durchgangsbohrungen ausgebildet, die parallel zur axialen Bohrung 34 verlaufen.

Im zusammengebauten Zustand befindet sich das Hülsenelement 15 und das Schliesselement 8 auf dem Drehelement 16. Die erste Stirnfläche 35 des Hülsenelements 15 liegt am Anschlag 27 des Drehelements 16 an. Die erste Stirnfläche 41 des Schliesselements 8 liegt auf der zweiten Stirnfläche 36 des Hülsenelements 15 auf. Das Schliesselement 8 und das Hülsenelement 15 werden auf dem Drehelement 16 durch ein Halteelement 6 gehalten, welches in der Aussparung 37 des Drehelements 16 aufgenommen ist. Das Halteelement 6 ist gemäss des vorliegenden Ausführungsbeispiels als Ringelement ausgebildet. Der Aussendurchmesser des Halteelements 6 ist grösser als der Innendurchmesser der axialen Bohrung 34 des Schliesselements 8. Das Halteelement 6 kann beispielsweise als geschlitzter Metallring ausgebildet sein oder ein dehnbares Material enthalten, sodass er über den konischen Endbereich des unteren Endes des Drehelements 16 gestülpt werden kann.

Das Schliesselement 8 ist drehfest mit dem Drehelement 16 verbunden, das heisst, das Schliesselement 8 bewegt sich mit dem Drehelement 16 mit, wenn es in eine andere Stellung gedreht wird. Das Schliesselement 8 kann formschlüssig oder kraftschlüssig mit dem Drehelement 16 verbunden sein. Die Länge des Hülsenelements 15 und die Länge des Schliesselements 8 können etwas grösser sein als der Abstand zwischen dem Anschlag 27 und der Aussparung 37 des Drehelements, sodass das Halteelement 6 das Hülsenelement 15 und das Schliesselement 8 gegen den Anschlag 27 drückt. Hierdurch kann eine verbesserte Abdichtung gegen allfällige Leckagen erzielt werden.

Zusätzlich können zur Abdichtung in dieser Darstellung nicht gezeigte Dichtungselemente vorgesehen werden, die eine Fluidströmung ausserhalb der hierfür vorgesehenen Wege verhindern.

Fig. 4c zeigt die Ventilanordnung 1 gemäss Fig. 4a, wenn der Behälter 5 als Fluidquelle ausgebildet ist. Gemäss dieses Ausführungsbeispiels soll der Behälter 5 entleert werden. Zu diesem Zweck wird das Drehelement 16 im Hülsenelement 15 um einen Winkel gedreht, der im vorliegenden Ausführungsbeispiel 90 Grad beträgt. Das Drehelement 16 befindet sich somit in der zweiten Stellung.

In der in Fig. 4c gezeigten zweiten Stellung des Drehelements 16 ist die dritte radiale Öffnung 13 über die Durchgangsbohrung 17 mit der vierten radialen Öffnung 14 verbunden, sodass Fluid über die dritte Fluidleitung 23 vom Behälter 5 in die dritte radiale Öffnung 13 einströmen kann. Die Rückschlagventile 3, 4 befinden sich in der geöffneten Stellung, wenn der Behälter 5 mit der Ventilanordnung 1 verbunden ist. Das Fluid aus dem Behälter 5 kann von der dritten radialen Öffnung 13 in die Durchgangsbohrung 17 und von der Durchgangsbohrung 17 in die vierte radiale Öffnung 14 strömen. Die vierte radiale Öffnung 14 ist mit der vierten Fluidleitung 24 in fluidleitender Verbindung, welche wiederum mit dem Einlass der Pumpe 2 in Verbindung ist. Die Zulaufleitung 25 ist durch das Schliesselement 8 geschlossen, sodass das Fluid vom Behälter 5 von der Pumpe 2 angesaugt werden kann. Die Pumpe 2 fördert nunmehr das Fluid aus dem Behälter 5, sodass der Behälter 5 wesentlich schneller entleert werden kann als durch Austritt des Fluids in die Umgebung durch das geöffnete zweite Rückschlagventil 4.

Die Pumpe 2 fördert das Fluid in die erste Fluidleitung 21. Von der ersten Fluidleitung 21 gelangt das Fluid in die Ablaufleitung 26. Das Schliesselement 8 enthält gemäss dieses Ausführungsbeispiels eine zweite Verbindungsöffnung 38, welche in der zweiten Stellung genau auf die Auslassöffnung der Ablaufleitung 26 zu liegen kommt. Daher kann das Fluid durch die zweite Verbindungsöffnung 38 in die Umgebung strömen und somit die Ventilanordnung 1 verlassen.

Fig. 4d zeigt eine Explosionszeichnung des in Fig. 4c dargestellten Ausführungsbeispiels der Ventilanordnung 1 in einer Ansicht von vorne in der zweiten Stellung. Das Drehelement 16, das Hülsenelement 15, das Schliesselement 8 und das Halteelement 6 sind gleich aufgebaut wie in der Darstellung in Fig. 4b, sodass auf die Beschreibung in Fig. 4b verwiesen werden kann, die in analoger Weise auf die Darstellung gemäss Fig. 4d anwendbar ist.

Das Drehelement 16 kann eine dritte Stellung einnehmen, welche sich zwischen der ersten und der zweiten Stellung befindet, was zeichnerisch nicht dargestellt ist. In der dritten Stellung ist keine der radialen Öffnungen 11, 12, 13, 14 über die Durchgangsbohrung 17 verbunden, sodass kein Fluid strömen kann. Die Rückschlagventile 3, 4 befinden sich in der geöffneten Stellung, wenn der Behälter 5 mit der Ventilanordnung 1 verbunden ist. Das Fluid aus dem Behälter 5 kann nicht weiter als bis zur zweiten radialen Öffnung 12 bzw. der dritten radialen Öffnung 13 gelangen. Daher bleibt sämtliches im Behälter 5 befindliches Fluid im Innenraum desselben. Wenn es sich bei dem Behälter um einen aufblasbaren Gegenstand handelt, verharrt der aufblasbare Gegenstand im aufgeblasenen Zustand. Die Pumpe 2 ist in dieser Stellung nicht in Betrieb. Die Durchgangsbohrung 17 befindet sich in einer Zwischenposition, das Drehelement 16 wurde um einen Winkel von 45 Grad in Bezug auf eine der in Fig. 2a oder Fig. 2c gezeigten Stellungen gedreht. Das Kontaktelement 30 befindet sich im Kontaktaufnahmeelement 33 in einer Zwischenposition, die zwischen dem ersten Kontaktbereich 31 und dem zweiten Kontaktbereich 32 liegt.

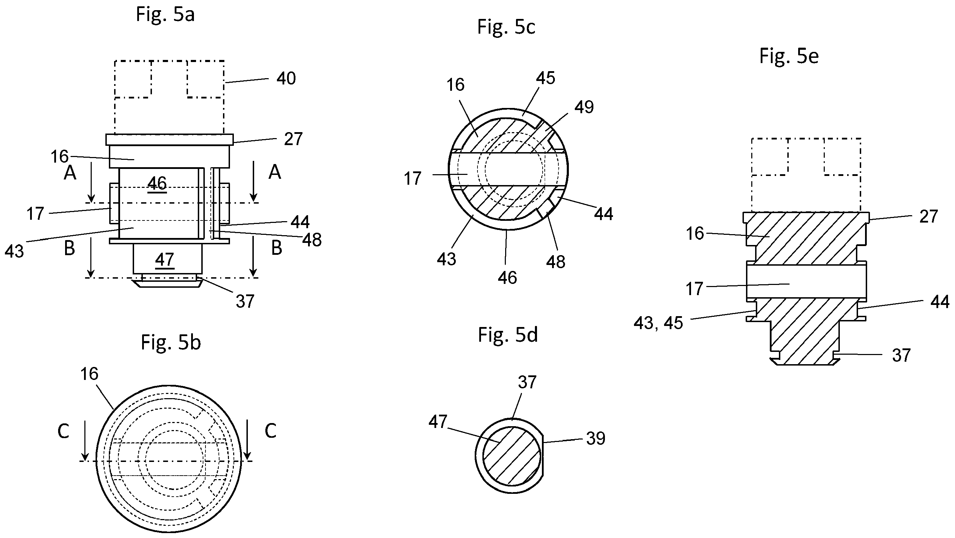

Fig. 5a zeigt eine Ansicht eines Drehelements 16 eines vierten Ausführungsbeispiels zur Verwendung in einem Hülsenelement 15 nach einem der vorhergehenden Ausführungsbeispiele. Das Drehelement 15 enthält einen Anschlag 27 zur Auflage des Hülsenelements 15. Das Drehelement 16 weist eine Durchgangsbohrung 17 auf und eine Aussparung 37, welche zur Aufnahme eines Halteelements 6 ausgebildet ist, wie in den vorhergehenden Ausführungsbeispielen gezeigt. Das Drehelement 16 kann ein Betätigungselement 40 umfassen, welches zur manuellen Betätigung des Drehelements ausgebildet ist. Das Betätigungselement kann mit Kennzeichnungen versehen sein, welche dem Benutzer anzeigen, in welchen der früher beschriebenen Stellungen sich das Drehelement 16 gerade befindet.

Das Drehelement 16 umfasst einen ersten Mantelabschnitt 46, welcher eine ersten Aussendurchmesser aufweist und einen zweiten Mantelabschnitt 47, welcher zweiten Aussendurchmesser aufweist. Der erste Abschnitt enthält die Durchgangsbohrung 17, der zweite Abschnitt ist zur Aufnahme eines Schliesselements 8 ausgebildet. Gemäss des vorliegenden Ausführungsbeispiels ist der erste Aussendurchmesser grösser als der zweite Aussendurchmesser. Zwischen dem ersten Abschnitt und dem zweiten Abschnitt befindet sich somit ein Absatz.

Das Drehelement 16 gemäss dieses Ausführungsbeispiels enthält drei Ausnehmungen 43, 44, 45, welche auf der Mantelfläche angeordnet sind. Eine erste und eine zweite Ausnehmung 43, 44 ist in Fig. 5a teilweise sichtbar. Die Ausnehmungen dienen der Aufnahme je eines Dichtungselements, welches nicht dargestellt ist. Ein derartiges Dichtungselement kann ein Material enthalten, welches elastische Eigenschaften aufweist. Beispielsweise kann ein Dichtungselement zum Einsatz kommen, welches ein Elastomer enthält, beispielsweise einen Gummi. Gemäss eines Ausführungsbeispiels kann ein Dichtungselement zum Einsatz kommen, welches einen Schaumstoff enthält. Insbesondere kann ein geschlossenzelliger Schaumstoff für das Dichtungselement zum Einsatz kommen. Mittels dieser Dichtungselemente kann sichergestellt werden, dass keine Leckageströme im Zwischenraum zwischen Hülsenelement 15 und Drehelement 16 entstehen können, wenn Fluid durch die Durchgangsbohrung 17 strömt.

Fig. 5b zeigt eine Ansicht des Drehelements gemäss Fig. 5a von oben, wobei das Betätigungselement 40 in dieser Darstellung weggelassen worden ist.

Fig. 5c zeigt einen Schnitt durch das Drehelement 16 gemäss Fig. 5a entlang der mit A-A bezeichneten Schnittebene. Die Schnittebene gemäss Fig. 5c ist durch den ersten Abschnitt 46 des Drehelements 16 gelegt. Die Durchgangsbohrung 17 ist im Schnitt dargestellt, sie weist ein erstes Ende und ein zweites Ende auf. Die erste Ausnehmung 43 schliesst an das erste Ende der Durchgangsbohrung 17 an und erstreckt sich bis zu einem Stegelement 48, welches die erste Ausnehmung 43 von der zweiten Ausnehmung 44 trennt. Das zweite Ende der Durchgangsbohrung 17 wird von der zweiten Ausnehmung 44 umgeben. Das in dieser zweiten Ausnehmung 44 befindliche Dichtungselement umgibt das zweite Ende der Durchgangsbohrung 17 und dichtet diese gegen den im Einbauzustand verbleibenden Spalt zwischen dem Drehelement 16 und dem Hülsenelement 15 ab. Auch die zweite Ausnehmung 44 ist von der dritten Ausnehmung 45 durch ein Stegelement 49 getrennt. Dieses Stegelement 49 ist in Fig. 5a nicht sichtbar, es kann aber in gleicher Weise wie das Stegelement 48 auf dem ersten Mantelabschnitt 46 angeordnet sein.

Die zweiten und dritten Ausnehmungen 44, 45 können auch ein einziges Dichtungselement enthalten. Sie sind oberhalb und unterhalb des ersten Endes der Durchgangsbohrung 17, das als Stutzen ausgebildet ist, miteinander verbunden. Ein wesentlicher Vorteil der vorliegenden Anordnung von mindestens zwei Dichtungselementen in den ersten, zweiten und dritten Ausnehmungen 43, 44, 45 ist darin zu sehen, dass die Dichtungselemente einfach ausgetauscht werden können. Zudem sind die Dichtungselemente durch die Stegelemente 48, 49 in ihrer radialen Position fixiert, sodass sie die Drehbewegungen des Drehelements mitmachen. Der Innenraum des Hülsenelements 15 ist vorzugsweise zylinderförmig und weist eine glatte Oberfläche auf, sodass die Dichtungselemente ohne nennenswerten Widerstand und somit ohne nennenswerten Abrieb auf der Innenraumfläche des Hülsenelements 15 gleiten können.

Fig. 5d zeigt einen Schnitt durch das Drehelement 16 gemäss Fig. 5a entlang der mit B-B bezeichneten Schnittebene. Die Schnittebene gemäss Fig. 5c ist durch den zweiten Mantelabschnitt 47 des Drehelements 16 gelegt. Der zweite Mantelabschnitt 47 dient der Aufnahme eines Schliesselements 8 und eines Halteelements 6, welches das Schliesselement 8 in seiner Position hält. Die Mantelfläche des zweiten Mantelabschnitts 47 weist hierzu einen Passungsabschnitt 39 auf, der zur formschlüssigen Aufnahme des Schliesselements 8 dient. Das Schliesselement 8 ist durch diese formschlüssige Verbindung über den Passungsabschnitt 39 drehfest mit dem Drehelement 16 verbunden. Diese formschlüssige Verbindung ist nur ein mögliches Ausführungsbeispiel für die Koppelung des Schliesselements 8 mit dem Drehelement 16 und ist in Fig. 5d exemplarisch als besonders einfache und robuste Lösung gezeigt.

Fig. 5e zeigt einen Längsschnitt durch das Drehelement 16 gemäss Fig. 5b entlang der mit C-C bezeichneten Schnittebene. In Fig. 5e ist gezeigt, dass das erste Ende der Durchgangsbohrung 17 von den Ausnehmungen 43, 44 umgeben ist, wobei in Fig. 5e der Übergang gezeigt ist. Die Ausnehmungen 43, 44 sind somit miteinander verbunden. Das erste Ende der Durchgangsbohrung 17 kann somit von mindestens einem Dichtungselement vollständig umgeben sein. Das zweite Ende der Durchgangsbohrung 17 ist in der Ausnehmung 45 aufgenommen, welche das zweite Ende der Durchgangsbohrung 17 umgibt. Ein Dichtungselement ist im Betriebszustand in der Ausnehmung 45 aufgenommen, sodass das zweite Ende der Durchgangsbohrung 17 im Einbauzustand vollständig vom Dichtungselement umschlossen ist. Die Dichtungselemente sind in den vorliegenden Darstellungen weggelassen.

Für den Fachmann ist offensichtlich, dass viele weitere Varianten zusätzlich zu den beschriebenen Ausführungsbeispielen möglich sind, ohne vom erfinderischen Konzept abzuweichen. Der Gegenstand der Erfindung wird somit durch die vorangehende Beschreibung nicht eingeschränkt und ist durch den Schutzbereich bestimmt, der durch die Ansprüche festgelegt ist. Für die Interpretation der Ansprüche oder der Beschreibung ist die breitest mögliche Lesart der Ansprüche massgeblich. Insbesondere sollen die Begriffe "enthalten" oder "beinhalten" derart interpretiert werden, dass sie sich auf Elemente, Komponenten oder Schritte in einer nicht-ausschliesslichen Bedeutung beziehen, wodurch angedeutet werden soll, dass die Elemente, Komponenten oder Schritte vorhanden sein können oder genutzt werden können, dass sie mit anderen Elementen, Komponenten oder Schritten kombiniert werden können, die nicht explizit erwähnt sind. Wenn die Ansprüche sich auf ein Element oder eine Komponente aus einer Gruppe beziehen, die aus A, B, C bis N Elementen oder Komponenten bestehen kann, soll diese Formulierung derart interpretiert werden, dass nur ein einziges Element dieser Gruppe erforderlich ist, und nicht eine Kombination von A und N, B und N oder irgendeiner anderen Kombination von zwei oder mehr Elementen oder Komponenten dieser Gruppe.

## Patentansprüche

1. Ventilanordnung (1), enthaltend ein Ventilgehäuse (10) welches ein Drehelement (16) und ein Hülsenelement (15) enthält, wobei das Hülsenelement (15) eine Mehrzahl von radialen Öffnungen (11, 12, 13, 14) enthält, wobei eine erste radiale Öffnung (11) gegenüber liegend zu einer zweiten radialen Öffnung (12) angeordnet ist, wobei eine dritte radiale Öffnung (13) gegenüberliegend zu einer vierten radialen Öffnung (14) angeordnet ist, wobei das Drehelement (16) eine Durchgangsbohrung (17) enthält, **dadurch gekennzeichnet, dass** das Drehelement (16) im Hülsenelement (15) derart drehbar ist, dass die Durchgangsbohrung (17) entweder mit der ersten radialen Öffnung (11) und zweiten radialen Öffnung (12) in fluidleitender Verbindung steht oder mit der dritten radialen Öffnung (13) und der vierten radialen Öffnung (14) in fluidleitender Verbindung steht oder mit keiner der ersten, zweiten, dritten oder vierten radialen Öffnung (11, 12, 13, 14) in fluidleitender Verbindung steht, wobei die erste radiale Öffnung (11) über eine erste Fluidleitung (21) zur Verbindung mit einem Ausgang einer Pumpe (2) ausgebildet ist, wobei die zweite radiale Öffnung (12) mit einer zweiten Fluidleitung (22) verbindbar ist, wobei die dritte radiale Öffnung (13) mit einer dritten Fluidleitung (23) verbindbar ist, wobei die vierte radiale Öffnung (14) mit einer vierten Fluidleitung (24) verbindbar ist.

2. Ventilanordnung (1) nach Anspruch 1, wobei die vierte Fluidleitung (24) zur Verbindung mit einem Eingang der Pumpe (2) ausgebildet ist.

3. Ventilanordnung (1) nach einem der Ansprüche 1 oder 2, wobei die zweite Fluidleitung (22) und die dritte Fluidleitung (23) zur Verbindung mit einem Behälter (5) ausgebildet sind.

4. Ventilanordnung (1) nach einem der vorhergehenden Ansprüche, wobei in einer ersten Stellung des Drehelements (16) die erste Öffnung (11) mit der ersten Fluidleitung (21) verbunden ist, wobei die erste Öffnung (11) mit der Durchgangsbohrung (17) in fluidleitender Verbindung steht, wobei die zweite Öffnung (12) mit der Durchgangsbohrung (17) zur Förderung eines Fluids in die zweite Fluidleitung (22) verbunden ist.

5. Ventilanordnung (1) nach einem der vorhergehenden Ansprüche, wobei in einer zweiten Stellung des Drehelements (16) die dritte Fluidleitung (23) mit der dritten Öffnung (13) verbunden ist, wobei die dritte Öffnung (13) mit der Durchgangsbohrung (17) in fluidleitender Verbindung steht, wobei Durchgangsbohrung (17) mit der vierten Öffnung (14) in Verbindung steht, wobei die vierte Öffnung (14) mit der vierten Fluidleitung (24) in Verbindung steht.

6. Ventilanordnung (1) nach einem der vorhergehenden Ansprüche, wobei das Hülsenelement (15) eine Zulaufleitung (25) und eine Ablaufleitung (26) enthält.

7. Ventilanordnung (1) nach Anspruch 6, wobei die Zulaufleitung (25) und die Ablaufleitung (26) mittels eines Schliesselements (8) verschliessbar sind.

8. Ventilanordnung (1) nach Anspruch 7, wobei das Schliesselement (8) mindestens eine Verbindungsöffnung (28, 38) enthält.

9. Ventilanordnung (1) nach Anspruch 8, wobei die Verbindungsöffnung (28) mit der Zulaufleitung (25) verbunden ist, sodass ein Fluid von der Verbindungsöffnung (28) in die Zulaufleitung (25) ansaugbar ist, um in die vierte Fluidleitung (24) eingeleitet zu werden, wenn sich das Drehelement (16) in der ersten Stellung befindet.

10. Ventilanordnung (1) nach Anspruch 9, wobei die erste Fluidleitung (21) mit der ersten radialen Öffnung (11) verbunden ist, wobei die erste radiale Öffnung (11) über die Durchgangsbohrung (17) mit der zweiten radialen Öffnung (12) und mit der zweiten Fluidleitung (22) verbunden ist, wenn sich das Drehelement (16) in der ersten Stellung befindet.

11. Ventilanordnung (1) nach Anspruch 8, wobei die Verbindungsöffnung (28, 38) mit der Ablaufleitung (26) verbunden ist, sodass ein Fluid durch die Verbindungsöffnung (28, 38) in die Ablaufleitung (26) abpumpbar ist, wenn sich das Drehelement (16) in der zweiten Stellung befindet.

12. Ventilanordnung (1) nach Anspruch 11, wobei das Fluid durch die dritte Fluidleitung (23) in die dritte radiale Öffnung (13) des Hülsenelements (15) einleitbar ist, von der dritten radialen Öffnung (13) über die Durchgangsbohrung (17) in die vierte radiale Öffnung (14) einleitbar ist und von der vierten Öffnung (14) in die vierte Fluidleitung (24) einleitbar ist.

13. Ventilanordnung (1) nach einem der vorhergehenden Ansprüche, wobei das Drehelement (16) ein Kontaktelement (30) enthält.

14. Ventilanordnung nach Anspruch 13, wobei das Schliesselement (8) ein Kontaktaufnahmeelement (33) enthält, mittels welchem ein elektrischer Kontakt herstellbar ist.

15. Ventilanordnung (1) nach einem der vorhergehenden Ansprüche, wobei die Ventilanordnung (1) ein Andockelement enthält.
